# FASCICULE DE BREVET EUROPEEN

(11) **EP 1 588 938 B1**
(45) Date de publication et mention de la délivrance du brevet: **06.02.2008**
(21) Numéro de dépôt: 05102904.9
(22) Date de dépôt: 13.04.2005
(51) Int. Cl.: B64C 25/16

(54) **Déflecteur de flux aérodynamique pour train d'atterrissage d'aéronef**
Aerodynamische Verkleidung für ein Flugzeugfahrwerk
Aerodynamic fairing for an aircraft landing gear

(30) Priorité: 20.04.2004 FR 0450739
(43) Date de publication de la demande: 26.10.2005
(73) Titulaire: AIRBUS France, 31060 Toulouse (FR)
(72) Inventeur: FORT, Frédéric, 31180, St. Genies Bellevue (FR)
(74) Mandataire: Schmit, Christian Norbert Marie

(56) Documents cités:
- WO-A-20/04000502
- GB-A- 756 111
- US-B1- 6 619 587

## Description

La présente invention concerne un dispositif déflecteur de flux aérodynamique pour train d'atterrissage d'aéronef.

Une part importante du bruit généré par un aéronef lors des phases d'atterrissage provient du train d'atterrissage avant sorti de cet aéronef, cet organe étant pourvu d'éléments non carénés tels que la jambe de train, les dispositifs de freinage et de suspension comportant des pièces anguleuses s'opposant à l'écoulement de l'air.

La présente invention a pour but notamment de réduire les bruits générés par le train d'atterrissage sorti en phase d'atterrissage.

Le document GB 756 111 décrit un dispositif de train d'atterrissage rentrant, comportant, en avant de la jambe de train, un élément de trappe solidaire de la jambe de train, placé en amont de cette jambe de train et faisant office de déflecteur. Cet élément de trappe n'est notamment pas manoeuvré par un dispositif de commande indépendamment de la jambe de train pour se déplacer entre une position de fermeture du logement de train, une position permettant la sortie du train et une position de masquage.

A cet effet, la présente invention a pour objet un dispositif déflecteur de flux aérodynamique pour train d'atterrissage escamotable dans un logement d'un aéronef et comprenant au moins un élément de fermeture dudit logement apte à occuper, sous l'action d'un dispositif de commande, une position de masquage, par rapport au flux aérodynamique, d'au moins une partie du train d'atterrissage en position sortie et formant ainsi un dispositif aérodynamique réducteur de bruit.

Un tel dispositif assure en, phase d'atterrissage, grâce au carénage de l'élément de fermeture, lorsque ce dernier est mis en position déflecteur en avant du train d'atterrissage, un écoulement du flux aérodynamique canalisé autour du train d'atterrissage, éliminant ainsi les turbulences normalement causées par les éléments du train et les bruits associés.

Selon un premier mode de réalisation de l'invention l'élément de fermeture comprend notamment au moins un élément mobile, sous l'action du dispositif de commande, entre une première position de fermeture du logement, une deuxième position permettant la sortie du train et une troisième position constituant ladite position de masquage.

Plus particulièrement, l'élément de fermeture comporte deux premiers volets, solidaires d'un bâti articulé selon un premier axe transversal sur la structure de l'aéronef, pivotant chacun autour de premiers axes longitudinaux, disposés de part et d'autre du logement du train d'atterrissage.

Selon ce mode de réalisation, le bâti est notamment constitué d'une structure en U avec une branche centrale, pourvue de moyens d'articulation du bâti selon ledit axe transversal, et deux branches latérales portant les premiers volets et pourvues de moyens d'articulation des volets selon lesdits premiers axes longitudinaux, les premiers volets étant reliés à une première extrémité de premiers vérins de manoeuvre fixés au bâti par leur seconde extrémité.

En mode de réalisation particulier, les branches latérales du bâti sont pourvues de flancs latéraux formant des carénages verticaux longitudinaux et les premiers vérins de manoeuvre, commandant la manoeuvre des premiers volets autour des branches latérales, sont reliés audits flancs latéraux.

Plus particulièrement, les flancs latéraux sont reliés à une première extrémité de deuxièmes vérins de manoeuvre, fixés à la structure de l'aéronef par leur seconde extrémité, et, commandant la manoeuvre du bâti autour dudit premier axe transversal.

Selon un deuxième mode de réalisation, le dispositif déflecteur est constitué d'un capot inférieur solidarisé à la structure de l'aéronef au travers d'un dispositif de liaison et de manoeuvre apte à déplacer le capot inférieur entre une position arrière de fermeture du logement, une position avant d'ouverture du logement et une position inclinée réalisant ladite position de masquage.

Selon ce mode de réalisation, le dispositif de liaison comporte un quadrilatère articulé, comprenant au moins deux bras de liaison longitudinaux chacun pourvu d'une première articulation au niveau du capot inférieur et d'une seconde articulation sur un élément solidaire de la structure de l'aéronef, le capot se manoeuvrant entre ladite position de fermeture du logement et ladite position d'ouverture du logement par un mouvement rotatif de bascule des bras de liaison entre une position arrière et une position avant.

Plus particulièrement, le dispositif de liaison comporte un bras principal relié à la structure de l'aéronef par une articulation transversale à l'axe longitudinal de l'aéronef et susceptible de s'incliner pour placer le capot dans ladite position inclinée.

Les bras de liaison sont notamment reliés par leur seconde articulation à un bras principal fixé à la structure de l'aéronef par une articulation transversale à l'axe longitudinal de l'aéronef, ladite position inclinée étant réalisée par la combinaison d'une inclinaison du bras principal et de la rotation des bras de liaison dans une position intermédiaire écartant le capot de la structure de l'aéronef.

Selon un troisième mode de réalisation, l'élément de fermeture comprend au moins un élément de trappe solidaire du fût d'une jambe du train d'atterrissage, monté sur le fût pivotant autour du train d'atterrissage et mobile entre une position de fermeture du logement et ladite position de masquage.

Selon ce mode de réalisation, le dispositif peut notamment comprendre deux éléments de trappe pivotant chacun d'un côté du fût entre une position en avant du fût et une position en arrière du fût, la position en arrière du fût permettant la fermeture du logement lors de la rentrée du train, la position en avant du fût constituant ladite position de masquage.

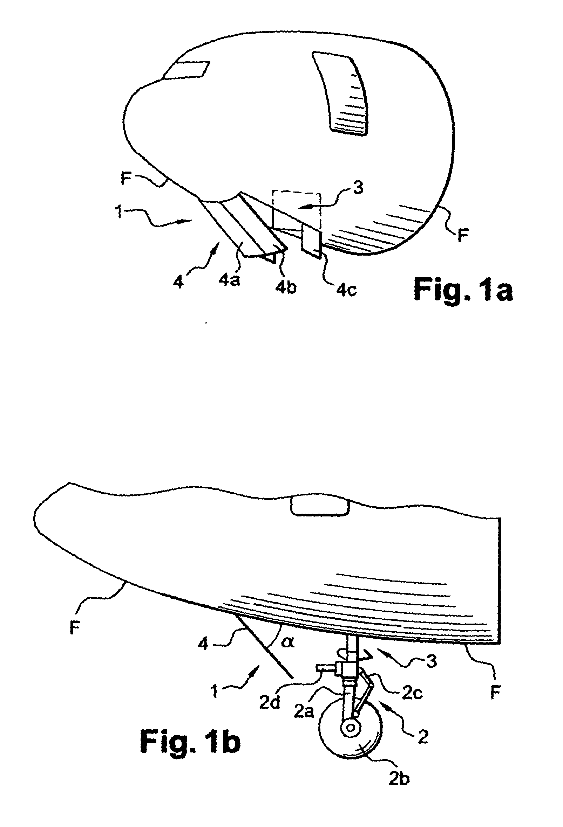

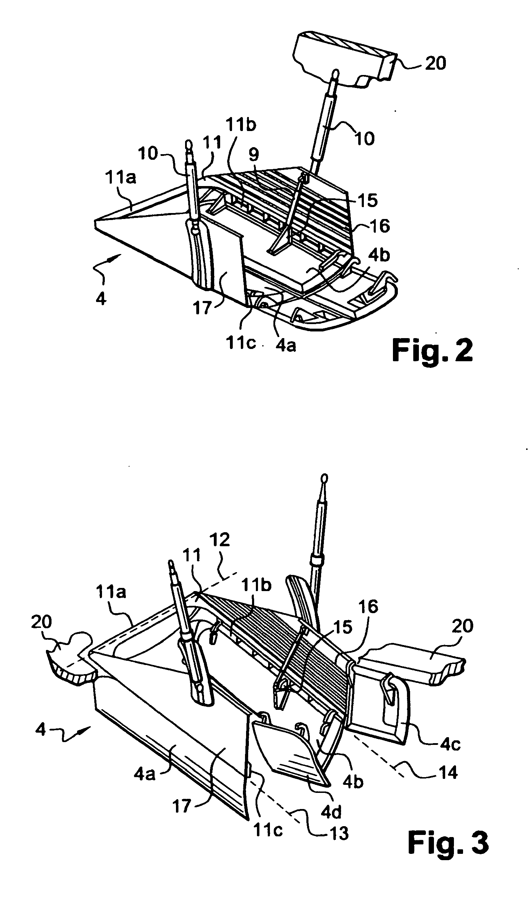

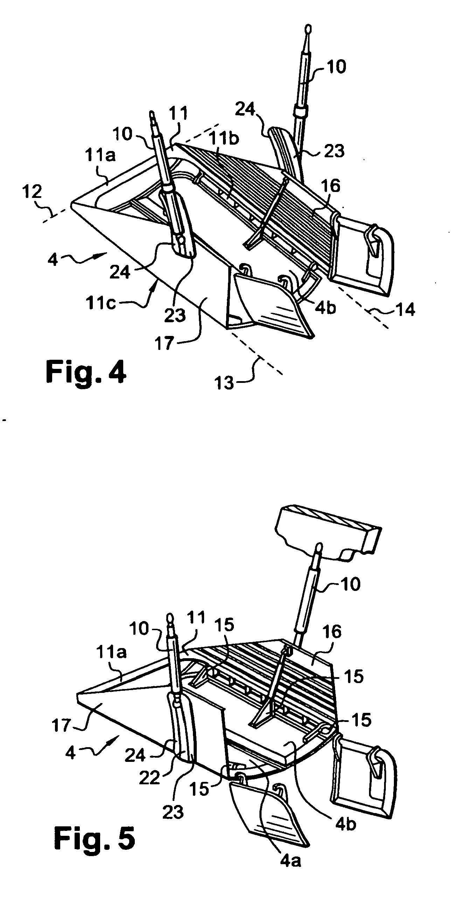

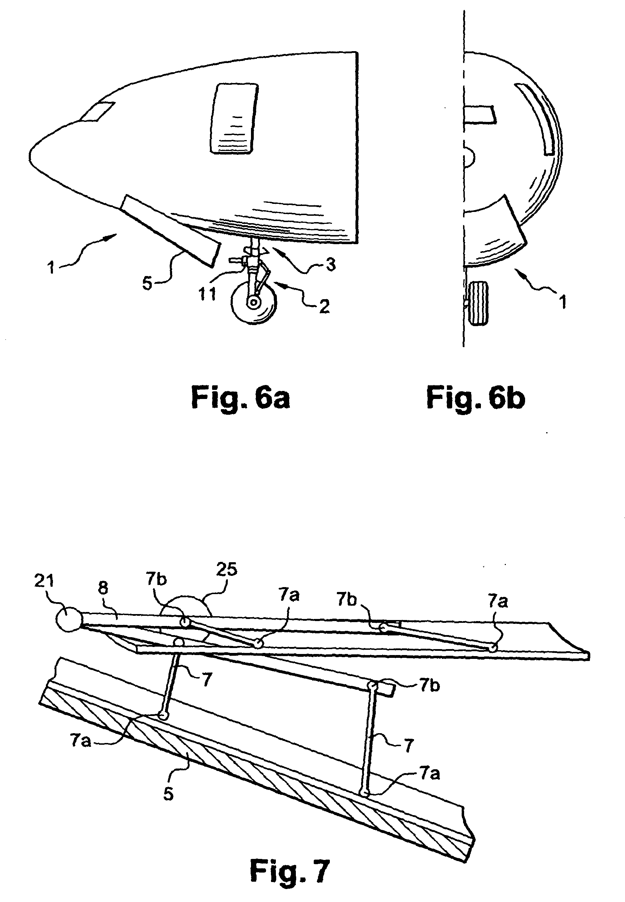

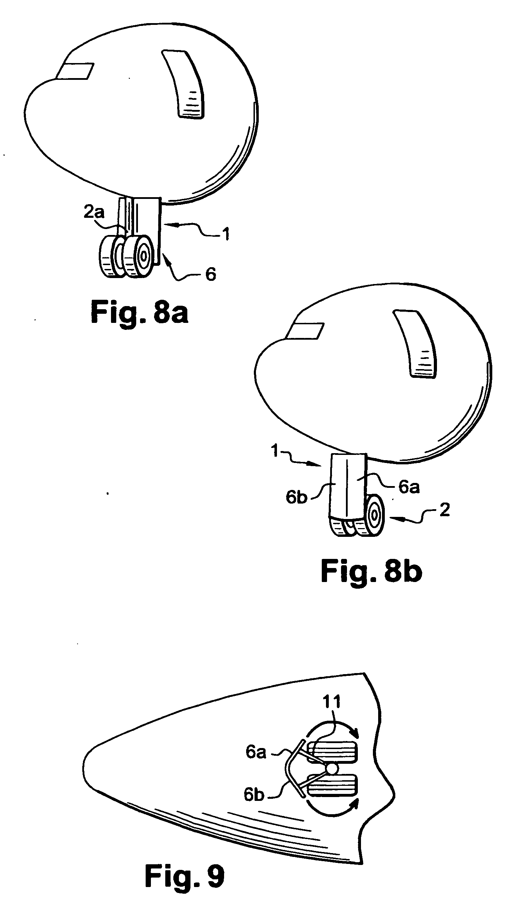

D'autres caractéristiques et avantages de l'invention seront mieux compris à la lecture de la description qui va suivre d'exemples de réalisation non limitatifs de l'invention en référence aux figures qui représentent:
En figures 1a et 1b: des vues générales en perspective et de côté de l'avant d'un aéronef pourvu d'un déflecteur de flux aérodynamique pour train d'atterrissage escamotable selon un premier mode de réalisation de l'invention;
En figure 2: une vue de détail en perspective du dispositif de la figure 1 en position de fermeture du logement du train d'atterrissage;
En figure 3: le dispositif de la figure 2 en position de sortie du train d'atterrissage;
En figure 4: le dispositif de la figure 2 dans sa position de masquage du train;
En figure 5: le dispositif de la figure 2 dans la position train sorti non masqué;
En figure 6a et 6b : des vues générales de côté et de face d'une partie avant d'un aéronef pourvu d'un déflecteur de flux aérodynamique pour train d'atterrissage selon un deuxième mode de réalisation de l'invention;
En figure 7: une vue schématique d'un détail de réalisation du dispositif des figures 6a et 6b en vue de dessous;
En figures 8a et 8b: des vues générales en perspective de l'avant d'un aéronef pourvu d'un déflecteur de flux aérodynamique pour train d'atterrissage escamotable selon un troisième mode de réalisation de l'invention, la figure 8a montrant le dispositif en position de sortie du train et la figure 8b montrant le dispositif en position de déflecteur de flux aérodynamique;
En figure 9: une vue de dessus du dispositif des figures 8a et 8b.

L'invention, dont trois exemples de réalisation sont représentés notamment aux figures 1a, 6a et 8a, a trait à la réalisation d'un dispositif déflecteur de flux aérodynamique constituant un dispositif aérodynamique de réduction de bruit par le masquage d'au moins une partie d'un train d'atterrissage d'un aéronef.

Il a été constaté qu'une partie importante du bruit généré par un aéronef en phase d'atterrissage est produite par son train d'atterrissage, notamment le train avant, dont la structure comporte des parties non aérodynamiques telles que la jambe de train et les divers dispositifs qui y sont associés, dont les éléments du triangle de suspension et les bras de direction.

La présente invention vise à disposer un élément de carénage en amont de cette jambe de train, cet élément de carénage étant, pour des raisons de simplification, de sécurité et pour ne pas augmenter inutilement la masse de l'aéronef, combiné à un élément de fermeture de type trappe, volet ou capot participant à la fermeture du logement du train d'atterrissage de l'aéronef.

Ainsi, l'invention consiste principalement à utiliser des éléments existants du dispositif de fermeture du logement recevant le train d'atterrissage une fois rentré pour constituer un tel déflecteur de flux aérodynamique et les figures 1a, 6a et 8b décrivent notamment un dispositif déflecteur de flux aérodynamique 1 pour train d'atterrissage 2 escamotable dans un logement 3 d'un aéronef, le dispositif comprenant au moins un élément de fermeture 4, 5, 6 dudit logement. La solution proposée par l'invention consiste à faire pivoter une sous-structure de la case ou logement de train en position de déflecteur.

Le premier mode de réalisation, décrit en figure 1a, représente une vue de l'avant de l'aéronef en perspective où le train d'atterrissage a été omis pour ne pas surcharger la figure, la figure 1 b représentant l'avant de l'aéronef en vue de côté avec le train d'atterrissage 2.

Le train d'atterrissage 2 comporte au moins une roue 2b et une jambe 2a pourvue d'un triangle de suspension 2c et d'une biellette de direction 2d. Ces éléments du fait de leur forme génèrent des tourbillons aérodynamiques et donc un bruit important.

Le dispositif, selon le mode de réalisation de la figure 1a, se compose d'éléments de trappe 4a, 4b mobiles, ces éléments étant aptes, sous l'action d'un dispositif de commande 9, 10 qui sera décrit plus loin, à prendre une position de masquage d'au moins la partie 2a du train d'atterrissage 2 par rapport au flux aérodynamique et à former ainsi, grâce au carénage, un dispositif aérodynamique réducteur de bruit.

Un aéronef traditionnel moderne comporte généralement quatre volets, ou éléments de trappe pour fermer le logement 3 du train avant 2. De ces quatre volets, deux volets sont des volets avant qui s'ouvrent pour laisser passer les roues du train avant puis se referment, une fois le train sorti, pour masquer la partie avant de l'ouverture constituée par le logement 3 afin que cette ouverture ne génère pas de traînée aérodynamique, et deux volets sont des volets arrière, positionnés de part et d'autre de la jambe du train sorti et restent ouverts une fois ce train sorti.

Selon le premier mode de réalisation de l'invention, les volets avants 4a et 4b sont agencés pour, une fois le train sorti, être aptes à prendre une position inclinée de masquage d'une partie, principalement la jambe 2a, du train d'atterrissage. Ainsi, selon ce mode de réalisation, le dispositif aérodynamique comprend les éléments de fermeture 4 constitués par les volets avants 4a, 4b mobiles entre une première position de fermeture du logement, une deuxième position de sortie du train et une troisième position, dite position de masquage.

La position de sortie du train est, comme pour un système traditionnel, une position où les volets avant s'ouvrent pour laisser passer le train d'atterrissage, la position de masquage étant une position pour laquelle la sous-structure pivotante comportant un bâti 11 s'incline d'un angle de l'ordre de 20° vers le bas et pour laquelle les volets 4a, 4b sont en position fermée.

La cinématique de passage de la première position à la deuxième position peut comporter une ouverture des volets puis une inclinaison de la sous-structure pour permettre la descente du train d'atterrissage puis, de la deuxième position vers la troisième position peut comporter une fermeture des volets, la sous-structure restant en position inclinée pour réaliser la fonction déflecteur.

La sous structure pivotante de la case ou logement de train comporte ainsi les volets avant 4a, 4b, les volets arrière restant identiques à la définition de base.

La manoeuvre des volets est réalisée par un dispositif de commande apte à les déplacer entre les trois positions, la position de sortie du train, pour laquelle les volets avants 4a, 4b sont fermés, étant utilisée notamment dans les phases de décollage, pour diminuer la traînée de l'avion, alors que la position de masquage est utilisée spécifiquement lors de l'atterrissage pour réduire le bruit généré par le train d'atterrissage, cette position de masquage procurant en plus une traînée supplémentaire participant à la réduction de la vitesse de l'aéronef en descente.

Pour ce premier mode de réalisation, le dispositif de commande comporte un bâti 11 sur lequel les volets 4a et 4b sont articulés selon des axes 13, 14 longitudinaux par rapport à l'aéronef, par des articulations 15 par exemple de type col de cygne.

Le bâti comporte une structure en U avec une branche centrale 11 a, pourvue de moyens d'articulation du bâti selon ledit axe transversal 12, et deux branches latérales 11 b, 11 c, portant chacune un volet 4a, 4b, ces branches latérales étant dirigées vers l'arrière de l'aéronef et le long de parois latérales du logement 3.

La fermeture et l'ouverture des volets est réalisée par des premiers vérins 9, les volets pivotant chacun autour d'une branche latérale 11 b, 11 c du bâti selon lesdits premiers axes longitudinaux 13, 14.

Le bâti est lui même articulé selon un premier axe transversal 12 sur la structure 20 de l'aéronef.

Les premiers vérins de manoeuvre 9 ont chacun une première extrémité reliée à l'un des premiers volets 4a, 4b et une seconde extrémité reliée au bâti et ils peuvent ainsi commander l'ouverture du logement 3 pour laisser passer le train et commander sa fermeture une fois le train sorti pour masquer une partie importante du logement 3 notamment en phase de décollage de l'avion, phase pour laquelle un minimum de traînée est souhaitée.

Pour faire prendre la position de masquage aux volets 4a, 4b, le bâti est solidaire d'une première extrémité de deuxièmes vérins de manoeuvre 10 reliés à la structure 20 de l'aéronef par leur seconde extrémité. Ces deuxièmes vérins 10 permettent d'incliner le bâti 11, par exemple d'un angle de l'ordre de 20° en faisant tourner celui-ci autour dudit premier axe transversal 12. De cette façon les volets 4a, 4b sont placés dans une position inclinée masquant une partie de la jambe de train 2a. Cette position permet aux volets 4a, 4b d'assurer leur fonction de déflecteur aérodynamique.

Selon l'exemple représenté, le bâti comporte des flancs latéraux 16, 17 en prolongement vertical des branches latérales 11 b, 11 c. Ces flancs forment avantageusement des carénages verticaux longitudinaux qui, lorsque le bâti est en position inclinée, constituent des déflecteurs latéraux carénant ainsi encore mieux, l'espace devant la jambe de train et canalisant ainsi le flux aérodynamique, pour l'empêcher de s'engouffrer dans le logement du train, ce qui diminue encore le bruit aérodynamique de cette partie de l'aéronef.

Ces flancs latéraux permettent en outre de relier plus aisément les premiers vérins de manoeuvre 9 au bâti pour leur donner une plus grande course pour actionner les premiers volets 4a, 4b autour des branches latérales 11 b, 11 c.

Pour guider le bâti dans son mouvement de rotation autour de l'axe transversal 12, les flancs du logement 3 comportent des rails de guidage 23, 24 définissant une rainure 22 dans laquelle coulisse l'extrémité inférieure des vérins 10. Ces rails de guidage ont un profil en arc de cercle confondu avec le périmètre d'un cercle centré sur l'axe transversal 12.

L'exemple de réalisation décrit aux figures 6a, 6b et 7 est basé sur un élément de fermeture constitué d'un capot inférieur 5 articulé sur la structure 20 de l'aéronef au travers d'un dispositif de liaison et de manoeuvre 7, 8 déplaçant le capot inférieur 5 entre une position arrière de fermeture du logement 3, une position avant d'ouverture du logement 3 et une position inclinée réalisant la position de masquage. Selon ce mode de réalisation, le capot inférieur forme une trappe qui recouvre une majeure partie du logement 3 du train 2 et qui se déplace d'un seul bloc de l'arrière vers l'avant de l'appareil pour dégager l'ouverture du logement et permettre la sortie du train d'atterrissage.

Ce capot, en forme de carénage, constitue, lorsqu'il est en position de fermeture du logement 3, une partie basse du fuselage.

Le dispositif de liaison 7, 8 comporte un quadrilatère articulé comprenant au moins deux bras de liaison longitudinaux 7, chacun pourvu d'une première articulation 7a au niveau du capot inférieur 5 et d'une deuxième articulation 7b sur un élément solidaire de la structure 20 de l'aéronef. Un dispositif de manoeuvre tel qu'un moteur électrique 25 relié à l'axe d'un des bras de liaison 7 commande la rotation des bras de liaison pour manoeuvrer le capot entre ladite position de fermeture du logement 3 et ladite position d'ouverture du logement 3 par un mouvement rotatif de bascule des bras de liaison 7 déplaçant le capot 5 entre une position arrière et une position avant.

Ce dispositif de liaison vu de côté en figure 7 peut être simple ou double en fonction des efforts nécessaires à la manoeuvre du capot, un dispositif double comportant deux bras principaux 8 parallèles espacés latéralement et recevant chacun une paire de bras de liaison 7.

Pour placer le capot dans la position inclinée lui permettant d'assurer sa fonction de déflecteur, le dispositif de liaison comporte un bras principal 8, relié à la structure 20 de l'aéronef par une troisième articulation 21, transversale à l'axe longitudinal de l'aéronef. Le bras principal est un bras longitudinal qui est susceptible de s'incliner par une rotation autour de l'axe transversal de la troisième articulation 21 pour placer le capot 5 dans la position inclinée. L'écartement du capot par rapport au fuselage de l'aéronef peut être accrue en combinant l'inclinaison du bras principal avec une rotation des bras de liaison 7 dans une position intermédiaire entre ladite position arrière et ladite position avant.

Selon ce mode de réalisation, le capot 5 peut être plus ou moins écarté afin d'accroître ou de réduire la surface exposée du train d'atterrissage 2. Ceci peut permettre notamment de ne pas causer une traînée trop importante en début de phase d'approche à l'atterrissage train sorti en maintenant le capot dans une position proche de sa pleine ouverture puis, à proximité du sol, de déployer au maximum le capot pour masquer pleinement le train d'atterrissage et diminuer au maximum le bruit aérodynamique généré par ce dernier.

Un troisième exemple de réalisation du dispositif selon l'invention est décrit aux figures 8a, 8b et 9. Selon cet exemple de réalisation, le dispositif est toujours basé sur l'utilisation d'au moins un élément de fermeture 6 du logement comme déflecteur, ici réalisé par des éléments de trappe arrière 6a, 6b solidaires du fût 2a d'une jambe du train d'atterrissage 2 et montés pivotant autour de ce fût.

Les éléments de trappe arrière 6a, 6b se déplacent en rotation autour du fût entre:
- une position où ils sont derrière la jambe du train 2, cette position étant la position permettant la rentrée du train dans le logement 3 et la fermeture du logement par les éléments de trappe arrière 6a, 6b, et,
- une position où ils sont en avant de la jambe du train et où ils réalisent leur fonction de déflecteur.

Ainsi, pour placer ces éléments en position de masquage, les éléments de trappe arrière 6a, 6b pivotent chacun d'un côté du fût autour du fût 2a du train 2 entre une position en avant du fût 2a et une position en arrière du fût 2a.

Ce mode de réalisation a l'avantage de simplifier le dispositif de commande des volets 6a, 6b mais, par contre, cause une traînée importante lorsque les volets sont en position arrière pour permettre la remontée du train.

Dans ses divers modes de réalisation, le dispositif selon l'invention peut bien entendu être relié à un système de gestion informatisé pilotant la position des éléments de trappe automatiquement en fonction des phases de vol de l'aéronef, ce notamment dans l'optique de ne pas surcharger le pilote et d'automatiquement mettre les éléments de trappe en position de déflecteur lors de l'approche et l'atterrissage puis, de les masquer au roulage et en phase de décollage dans le cas des deux premiers exemples de réalisation décrits ci-dessus.

L'invention ne se limite pas aux exemple décrits et, notamment, d'autres formes d'éléments de trappe sont envisageables pour remplir la fonction de déflecteur, le dispositif capot pouvant en outre être combiné à des trappes arrières pour réduire son encombrement.

## Revendications

1. - Dispositif déflecteur de flux aérodynamique (1), pour train d'atterrissage (2) escamotable dans un logement (3) d'un aéronef, comprenant au moins un élément de fermeture (4, 5) dudit logement et un dispositif de commande (7, 8, 9, 10) dudit élément de fermeture, ledit élément de fermeture (4, 5) étant apte à occuper, sous l'action dudit dispositif de commande (7, 8, 9, 10), une position de masquage, par rapport au flux aérodynamique, d'au moins une partie (2a) du train d'atterrissage (2) en position sortie, **caractérisé en ce que** l'élément de fermeture (4, 5) comprend au moins un élément mobile sous l'action du dispositif de commande (7, 8, 9, 10) entre une première position de fermeture du logement, une deuxième position permettant la sortie du train et une troisième position constituant ladite position de masquage.

2. - Dispositif selon la revendication 1, **caractérisé en ce que** l'élément de fermeture (4) comporte deux premiers volets (4a, 4b) et un bâti pouvant être articulé sur la structure (20) de l'aéronef selon un premier axe transversal (12), lesdits volets étant solidaires dudit bâti (11), lesdits volets pivotant chacun autour de premiers axes longitudinaux (13, 14) disposés de part et d'autre dudit bâti.

3. - Dispositif selon la revendication 2, **caractérisé en ce que** le bâti (11) a une structure en U avec une branche centrale (11a) pourvue de moyens d'articulation du bâti selon ledit axe transversal (12), et deux branches latérales (11b, 11c) portant les premiers volets (4a, 4b) et pourvues de moyens (15) d'articulation des volets (4a, 4b) selon lesdits premiers axes longitudinaux (13, 14).

4. - Dispositif selon la revendication 2 ou 3, **caractérisé en ce que** les premiers volets (4a, 4b) sont reliés à une première extrémité de premiers vérins de manoeuvre (9) fixés au bâti (11) par leur seconde extrémité.

5. - Dispositif selon la revendication 3, **caractérisé en ce que** les branches latérales (11b, 11c) du bâti (11) sont pourvues de flancs latéraux (16, 17) formant des carénages verticaux longitudinaux.

6. - Dispositif selon les revendications 4 et 5, **caractérisé en ce que** les premiers vérins de manoeuvre (9) sont reliés audits flancs latéraux (16, 17) et commandent la manoeuvre des premiers volets (4a, 4b) autour des branches latérales (11b, 11c).

7. - Dispositif selon la revendication 5 ou 6, **caractérisé en ce que** lesdits flancs latéraux (16, 17) sont reliés à une première extrémité de deuxièmes vérins de manoeuvre (10) pouvant être fixés à la structure (20) de l'aéronef par leur seconde extrémité et commandant la manoeuvre du bâti (11) autour dudit premier axe transversal (12).

8. - Dispositif selon la revendication 1, **caractérisé en ce que** l'élément de fermeture (4, 5, 6) est constitué d'un capot inférieur (5) formant une trappe qui recouvre une majeure partie du logement (3) et qui est adaptée à se déplacer d'un seul bloc de l'arrière vers l'avant de l'appareil et d'un dispositif de liaison et de manoeuvre (7, 8), pouvant solidariser la capot inférieur à la structure (20) de l'aéronef, adapté à déplacer le capot inférieur (5) entre une position arrière de fermeture du logement (3), une position avant d'ouverture du logement (3) et une position inclinée réalisant ladite position de masquage.

9. - Dispositif selon la revendication 8, **caractérisé en ce que** le dispositif de liaison (7, 8) comporte un quadrilatère articulé, comprenant au moins deux bras de liaison longitudinaux (7) chacun pourvu d'une première articulation (7a) au niveau du capot inférieur (5), et d'une deuxième articulation (7b) pouvant s'articuler sur un élément solidaire de la structure (20) de l'aéronef, le capot (5) se manoeuvrant entre ladite position de fermeture du logement (3) et ladite position d'ouverture du logement (3) par un mouvement rotatif de bascule des bras de liaison (7) entre une position arrière et une position avant.

10. - Dispositif selon la revendication 8 ou 9 **caractérisé en ce que** le dispositif de liaison comporte un bras principal (8) relié à la structure (20) de l'aéronef par une troisième articulation (21) transversale à l'axe longitudinal de l'aéronef et susceptible de s'incliner pour placer le capot (5) dans ladite position inclinée.

11. - Dispositif selon la revendication 9, **caractérisé en ce que** lesdits bras de liaison (7) sont reliés par leur seconde articulation (7b) à un bras principal (8) pouvant être fixé à la structure (20) de l'aéronef par une troisième articulation (21), transversale à l'axe longitudinal de l'aéronef, ladite position inclinée étant réalisée par la combinaison d'une inclinaison du bras principal (8) et de la rotation des .bras de liaison (7) dans une position intermédiaire entre ladite position arrière et ladite position avant et écartant le capot de la structure de l'aéronef.

12. - Dispositif déflecteur de flux aérodynamique (1), pour train d'atterrissage (2) escamotable dans un logement (3) d'un aéronef, comprenant au moins un élément de fermeture (6) dudit logement et un dispositif de commande dudit élément de fermeture, ledit élément de fermeture (6) étant apte à occuper, sous l'action dudit dispositif de commande, une position de masquage, par rapport au flux aérodynamique, d'au moins une partie du train d'atterrissage (2) en position sortie, l'élément de fermeture (6) comprenant au moins un élément mobile sous l'action du dispositif de commande entre une première position de fermeture du logement et une deuxième position constituant ladite position de masquage, **caractérisé en ce que** l'élément de fermeture (6) comprend au moins un élément de trappe (6a 6b) pouvant être rendu solidaire du fût (2a) d'une jambe du train d'atterrissage (2) et monté pivotant autour du train d'atterrissage (2).

13. - Dispositif selon la revendication 12, **caractérisé en ce qu'**il comprend deux éléments de trappe (6a, 6b) pivotant chacun d'un côté du fût (2a), entre une position en avant du fût (2a) et une position en arrière du fût, la position en arrière du fût permettant la fermeture du logement (3) lors de la rentrée du train, la position en avant du fût constituant ladite position de masquage.

14. - Aéronef équipé d'un dispositif déflecteur de flux aérodynamique (1), pour train d'atterrissage (2) escamotable selon l'une quelconque des revendications précédentes.

## Claims

1. - Aerodynamic airflow deflecting device (1) for a landing gear (2) that is retractable into a housing (3) of an aircraft, comprising at least one closing element (4, 5) of said housing and a control device (7, 8, 9, 10) for said closing element, said closing element (4, 5), when acted upon by said control device (7, 8, 9, 10), being capable of assuming a position opposing the aerodynamic airflow, which shields at least a part (2a) of the landing gear in its lowered position, **characterized in that** the closing element (4, 5) comprises at least one component, movable by said control device (7, 8, 9, 10) between a first position for closing the housing, a second position allowing the landing gear to exit and a third position constituting said shielding position.

2. - Device according to claim 1, **characterized in that** the closing element (4) comprises two first flaps (4a, 4b) and a jig able to be articulated on the structure (20) or the aircraft along a first transverse axis(12), said flaps being attached to the jig (11), said flaps each pivoting about first longitudinal axes (13, 14) located on both sides of said jig.

3. - Device according to claim 2, **characterized in that** the jig (11) includes a U-shaped structure with a central branch (11a) equipped with means for articulating the jig about said transverse axis (12), and two lateral branches (11b, 11c) carrying the first flaps (4a, 4b) and equipped with means (15) for articulating the flaps (4a, 4b) about said first longitudinal axes (13, 14).

4. - Device according to claim 2 or 3, **characterized in that** the first flaps (4a, 4b) are connected to a first end of first actuating jacks (9) which are attached to the jig (11) at their second end.

5. - Device according to claim 3, **characterized in that** the lateral branches (11b, 11c) of the jig (11) are provided with lateral panels (16, 17) which form vertical longitudinal fairings.

6. - Device according to claims 4 and 5, **characterized in that** the first actuating jacks (9) are connected to said lateral panels (16, 17) and direct the motion of the first flaps (4a, 4b) about the lateral branches (11b, 11c).

7. - Device according to claim 5 or 6, **characterized in that** the aforementioned lateral panels (16, 17) are connected to a first end of second actuating jacks (10) which may be attached to the aircraft structure (20) by their second end and directing the movement of the jig (11) about of the aforesaid first transverse axis (12).

8. - Device according to claim 1, **characterized in that** the closing element (4, 5, 6) is constituted of a lower hood (5), forming a hatch which covers a major part of the housing (3) and which is capable of moving as a whole from the rear to the front of the aircraft, and of a connecting and actuating device (7, 8) adapted to attach the lower hood to the structure (20), designed to move the lower hood (5) between a rear position for closing the housing (3), a position prior to opening the housing (3), and an inclined position constituting said shielding position.

9. - Device according to claim 8, **characterized in that** the connecting device (7, 8) comprises an articulated quadrilateral linkage, including at least two longitudinal connecting arms (7) each equipped with a first articulation (7a) at the side of the lower hood (5), and with a second articulation (7b) adapted to be articulated on an element attached to the aircraft structure (20), the hood (5) moving between said position for closing the housing (3) and said position for opening the housing (3) via a rotary movement of a rocker of the connecting arms (7) between a rear position and a front position.

10. - Device according to claim 8 or 9, **characterized in that** the connecting device comprising a main arm (8) that is connected to the aircraft structure (20) by means of a third articulation (21) that is transverse to the longitudinal axis of the aircraft and that can be inclined so as to place the hood (5) in said inclined position.

11. - Device according to claim 9, **characterized in that** said connecting arms. (7) are connected via their second articulation (7b) to a main arm (8) adapted to be attached to the aircraft structure (20) by means of a third articulation (21), transverse to the longitudinal axis of the aircraft, said inclined position being achieved through the combination of an inclination of the main arm (8) and a rotation of the connecting arms (7) to an intermediate position between said rear position and said front position and distancing the hood from the aircraft structure.

12. - Aerodynamic airflow deflecting device (1) for a landing gear (2) that is retractable into a housing (3) of an aircraft, comprising at least one closing element (6) of said housing and a control device for said closing element, when acted upon by said control device (7, 8, 9, 10), being capable of assuming a position opposing the aerodynamic airflow, which shields at least a part of the landing gear (2) in its lowered position, the closing element (6) comprising at least one movable component under the action of said control device between a first position for closing the housing and a second position constituting said shielding position **characterized in that** the closing element (6) comprises at least one trap door element (6a, 6b) adapted to be connected to the shaft (2a) of a leg of the landing gear (2), and mounted so as to pivot about the landing gear (2).

13. - Device according to claim 12, **characterized in that** it comprises two trap door elements (6a, 6b) each of which pivots on one side of the shaft (2a), between a position in front of the shaft (2a) and a position behind the shaft, with the position behind the shaft allowing the housing (3) to be closed once the landing gear has been retracted, the position in front of the shaft constituting said shielding position.

14. - Aircraft provided with an aerodynamic airflow deflecting device (1) for a landing gear (2) that is retractable according to any one of the preceding claims.

## Patentansprüche

1. Vorrichtung zur Ableitung von aerodynamischer Strömung (1) für ein Fahrgestell (2), welches in ein Gehäuse (3) eines Luftfahrzeuges einfahrbar ist und mindestens ein Verschlusselement (4,5) des Gehäuses und eine Steuerungseinheit (7,8,9,10) des Verschlusselements umfaßt, wobei das Verschlusselement (4,5) mittels der Steuerungseinheit (7,8,9,10) in eine Position bringbar ist, in der es zumindest teilweise (2a) das Fahrgestell (2) in ausgefahrener Position bezüglich der aerodynamischen Strömung abdeckt, **dadurch gekennzeichnet, dass** das Verschlusselement (4,5) mindestens ein Teil umfasst, welches mittels der Steuerungseinheit (7,8,9,10) zwischen einer ersten Position bei geschlossenem Gehäuse, einer zweiten Position, welche das Ausfahren des Fahrgestells ermöglicht, und einer dritten Position, welche die besagte Abdeckung ermöglicht, bewegt werden kann.

2. Vorrichtung gemäß Anspruch 1, **dadurch gekennzeichnet, dass** das Verschlusselement (4) zwei erste Klappen (4a, 4b) und ein Gestell, welches auf der Struktur (20) des Luftfahrzeugs um eine erste querlaufende Achse (12) beweglich ist, umfasst, wobei die Klappen auf dem Gestell befestigt sind, und jede um eine erste, längslaufende Achse auf beiden Seiten des Gestells schwenkbar ist.

3. Vorrichtung gemäß Anspruch 2, **dadurch gekennzeichnet, dass** sie ein U-förmiges Gestell (11) aufweist, wobei die Basis des U (11a) mit einem querlaufend beweglichen Gelenk (12) versehen ist, und die beiden Seiten des U (11b, 11c) die beiden ersten Klappen (4a, 4b) tragen, welche jeweils mit einem längsläufigen Gelenk (15) versehen sind.

4. Vorrichtung gemäß Anspruch 2 und 3, **dadurch gekennzeichnet, dass** die ersten Klappen (4a, 4b) an einem ersten Seitenstück von Bewegungszylindern (9) befestigt sind, welche an dem Gestell (11) über ihr zweites Seitenstück befestigt sind.

5. Vorrichtung gemäß Anspruch 3, **dadurch gekennzeichnet, dass** die beiden Seiten des U (11b, 11c) des Gestells (11) mit lateralen Flanschen (16, 17) versehen sind, welche vertikale längsläufige Verkleidungen bilden.

6. Vorrichtung gemäß der Ansprüche 4 und 5, **dadurch gekennzeichnet, dass** die ersten Bewegungszylinder (9) an den besagten lateralen Flanschen (16,17) angebracht sind und die Bewegung der ersten Klappen (4a, 4b) um die U - Seiten (11b, 11c) steuern.

7. Vorrichtung gemäß der Ansprüche 5 oder 6, **dadurch gekennzeichnet, dass** die lateralen Flansche (16, 17) an das erste Seitenstück von zweiten Bewegungszylindern (10) befestigt sind und diese wiederum über ihr zweites Seitenstück an der Struktur des Luftfahrzeugs (20) befestigbar sind und so die Bewegung des Gestells (11) um die erste querlaufende Achse (12) steuern.

8. Vorrichtung gemäß Anspruch 1, **dadurch gekennzeichnet, dass** das Verschlusselement (4, 5, 6) aus einer unteren Abdeckung (5) besteht, welche eine Klappe bildet, die einen Großteil des Gehäuses (3) abdeckt und welche derart eingestellt ist, dass sie sich als eine Einheit vom hinteren zum vorderen Teil der Maschine bewegt, sowie einer Verbindungs- und Bewegungseinrichtung (7,8), welche die untere Abdeckung mit der Struktur (20) des Luftfahrzeugs verbindet und dazu geeignet ist, die untere Abdeckung (5) in eine hintere geschlossene Position des Gehäuses (3), eine vordere geöffnete Position des Gehäuses (3) und eine geneigte Position, welche die besagte Abdeckung ermöglicht, zu bewegen.

9. Vorrichtung gemäß Anspruch 8, **dadurch gekennzeichnet, dass** die Verbindungseinrichtung (7, 8) aus einer viereckigen Einrichtung mit Gelenken besteht, welche mindestens zwei längslaufende Verbindungsarme (7) enthält, jeder mit einem ersten Gelenk (7a) auf der Seite der unteren Abdeckung (5), und einem zweiten Gelenk (7b), welches die Bewegung auf einem an der Struktur (20) des Luftfahrzeugs befestigten Element ermöglicht, und so die Abdeckung zwischen der geschlossenen Position des Gehäuses (3) und der geöffneten Position des Gehäuses (3) durch eine Dreh- und Kippbewegung der Verbindungsarme (7) zwischen der hinteren und der vorderen Position ermöglicht.

10. Vorrichtung gemäß der Ansprüche 8 und 9, bei der die Verbindungseinrichtung einen Hauptarm (8) enthält, welcher an die Struktur (20) des Luftfahrzeugs über ein drittes, zur Längsachse des Luftfahrzeug querlaufendes Gelenk (21) befestigt ist, und welches zu einer Kippbewegung imstande ist, um die Abdeckung (5) in die gekippte Position zu bewegen.

11. Vorrichtung gemäß Anspruch 9, **dadurch gekennzeichnet, dass** die besagten Verbindungsarme (7) über ein zweites Gelenk (7b) an dem Hauptarm (8) befestigt sind, welcher wiederum an der Struktur (20) des Luftfahrzeugs über ein drittes, zur Längsachse des Luftfahrzeug querlaufendes Gelenk (21) befestigbar ist, wobei die gekippte Position durch das Zusammenspiel des Kippens des Hauptarms (8) und der Drehung des Verbindungsarms (7) in einer Zwischenposition zwischen der hinteren und der vorderen Position unter Bildung eines Abstands zwischen der Abdeckung und der Struktur des Luftfahrzeugs realisiert wird.

12. Vorrichtung zur Ableitung von aerodynamischer Strömung (1) für ein Fahrgestell (2), welches in das Gehäuse (3) eines Luftfahrzeuges einfahrbar ist, das mindestens ein Verschlusselement (6) des Gehäuses und eine Steuerungseinheit des Verschlusselements umfasst, wobei das Verschlusselement (6) mittels der Steuerungseinheit in eine Position bringbar ist, in der es zumindest teilweise das Fahrgestell (2) in ausgefahrener Position bezüglich der aerodynamischen Strömung abdeckt, und das Verschlusselement (6) mindestens ein bewegliches Teil umfasst, welches mittels der Steuerungseinheit zwischen einer ersten Position bei geschlossenem Gehäuse und einer zweiten Position, welche die Position der Abdeckung darstellt, beweglich ist, **dadurch gekennzeichnet, dass** das Verschlusselement (6) mindestens ein Klappenelement (6a, 6b) umfasst, welches an dem Schaft eines Beines des Fahrgestells (2) befestigbar und um das Fahrgestell (2) herum schwenkbar montiert ist.

13. Vorrichtung gemäß Anspruch 12, **dadurch gekennzeichnet, dass** sie zwei Klappenelemente (6a, 6b) umfasst, welche jeweils an einer Seite des Schafts (2a) schwenkbar zwischen einer Position vor dem Schaft (2a) und einer Position hinter dem Schaft (2a) angebracht sind, und die Position hinter dem Schaft den Verschluss des Gehäuses beim Einfahren des Fahrgestells erlaubt, und die Position vor dem Schaft die Position der Abdeckung darstellt.

14. Luftfahrzeug mit einer Vorrichtung zur Ableitung von aerodynamischer Strömung (1) für ein versenkbares Fahrgestell (2) gemäß einem der vorausgegangen Ansprüche.
